**Europäisches Patentamt**

**European Patent Office**

**Office européen des brevets**

(11) Veröffentlichungsnummer: **0 008 355 B1**

(12) **EUROPÄISCHE PATENTSCHRIFT**

(45) Veröffentlichungstag der Patentschrift:
01.12.82

(21) Anmeldenummer: **79102417.7**

(22) Anmeldetag: **12.07.79**

(51) Int. Cl.³: **G 06 F 13/00, G 06 F 11/00**

(54) **Einrichtung zum Sichern von in Datenverarbeitungslagen gespeicherten Daten gegen unberechtigten Zugriff.**

(30) Priorität: **25.08.78 DE 2837241**

(43) Veröffentlichungstag der Anmeldung:
**05.03.80 Patentblatt 80/5**

(45) Bekanntmachung des Hinweises auf die Patenterteilung:
**01.12.82 Patentblatt 82/48**

(84) Benannte Vertragsstaaten:
**AT BE CH FR GB IT NL**

(56) Entgegenhaltungen:
**DD-A-75 162**
**DD-A-98 383**
**DE-A-2 148 689**
**DE-B-1 499 203**
**FR-A-2 253 416**
**US-A-4 130 870**

**Richard E. Matick, «Computer Storage Systems and Technology», John Wiley & Sons, 1977, S. 582, 601–607.**

**IBM-Nachrichten, 1971, Feb. S. 640–645.**

**Proceedings of the Spring Joint Computer Conference, 1972, S. 417–429.**

(73) Patentinhaber: **SIEMENS AKTIENGESELLSCHAFT Berlin und München, Postfach 22 02 61, D-8000 München 22 (DE)**

(72) Erfinder: **Schulz, Winfried, Dr.,Dipl.-Phys., Edelweissstrasse 58, D-8031 Puchheim (DE)**

## Einrichtung zum Sichern von in Datenverarbeitungsanlagen gespeicherten Daten gegen unberechtigten, Zugriff

Die Erfindung bezieht sich auf eine Einrichtung zum Sichern von in Datenverarbeitungsanlagen gespeicherten Daten gegen unberechtigten Zugriff, die zu bezüglich der Zugriffsberechtigung gleich zu behandelnden Schutzobjekten zusammengefasst sind und zu denen Benutzer von der Art der beim Zugriff durchzuführenden Operation abhängige Zugriffsrechte besitzen, mit Speichereinrichtungen in Form von benutzerindividuellen Tabellen, die den einzelnen Schutzobjekten zugeordnete Angaben über die Zugriffsberechtigung enthalten, und mit Steuereinrichtungen, die jeweils bei Übereinstimmung der gewünschten Zugriffsoperation mit der gespeicherten Zugriffsberechtigung den Zugriff zu den Daten steuern.

Mit dem Aufbau immer komplexerer Systeme in der Datenverarbeitung spielt die Sicherung von gespeicherten Daten gegen einen unberechtigten Zugriff eine immer grössere Rolle. Dieses Problem, in bezug auf die Datenverarbeitung in neuerer Zeit auch öffentlich diskutiert, spielt jedoch nicht nur hier, sondern überall dort eine Rolle, wo eine Mehrzahl von Benutzern zu einem Kommunikationssystem gemeinsam Zugriff hat, die für die Benutzung dieses Systems nicht nur eine allgemeine Zugriffsberechtigung nachweisen muss. Vielfach muss auch vom System her ausgeschlossen werden, dass an sich berechtigte Benutzer mit oder ohne Täuschungsabsicht durch eine für sie nicht zugelassene Zugriffsoperation in eine fremde Datenmenge eingreifen und dort im schlimmsten Fall sogar Daten verändern, d.h. Informationen zerstören.

Wie bereits angedeutet, tritt dieses Problem insbesondere bei der Verarbeitung von Daten in elektronischen Datenverarbeitungssystemen auf. Dabei ist es nicht einmal notwendig, dass mehrere Anwender voneinander unabhängig ein solches System simultan benutzen. In jedem Fall sind in einem Arbeitsspeicher der datenverarbeitenden Anlage nebeneinander mindestens ein Anwenderprogramm und Daten des Betriebssystems der datenverarbeitenden Anlage gespeichert. Auch in einem solchen Fall ist zu verhindern, dass zu den speicherresidenten Systemprogrammen durch Überschreiten des für Anwenderprogramme vorbehaltenen Teiles des Arbeitsspeichers fälschlich zugegriffen wird. Andererseits muss jedoch das Betriebssystem der datenverarbeitenden Anlage, insbesondere bei Fehlerroutinen auch zu Anwenderprogrammen vorbehaltenen Teilen des Arbeitsspeichers oder sogar zu sekundären Speichern zugreifen können. Vom Anwender aus betrachtet, sind weiter zu unterscheidende Zugriffsrechte zu beachten, wenn verschiedene Anwender berechtigt sind, zur Verarbeitung ihrer Probleme ein allen offenstehendes Programmsystem oder Teile davon beliebig oder mit Einschränkungen zu benutzen.

So ergibt sich eine Reihe von Zugriffskonflikten, die für einen einwandfreien Betrieb sicher gelöst werden müssen.

Diese Erläuterungen zeigen wohl, dass diese Problemstellung der elektronischen Datenverarbeitung an sich immanent ist, deshalb sind Lösungsansätze für dieses Problem auch bereits seit langem bekannt.

So ist es üblich, irrtümliche oder unbefugte Wechselwirkungen zwischen verschiedenen speicherresidenten Programmen möglichst weitgehend auszuschalten, indem bestimmte Bereiche des auch virtuell adressierten Arbeitsspeichers sowohl auf der realen als auch auf der virtuellen Stufe «verschlossen» werden. Zugriff zu einem solchen geschützten Bereich hat dann nur das Programm, das im aktivierten Zustand in einem Steuerregister, das vielfach den Funktionszustand der datenverarbeitenden Anlage steuert, einen passenden «Schlüssel» führt. Die in bezug auf die Sicherung der Daten gegen einen unberechtigten Zugriff gleich behandelten Bereiche des Speichers seien als Schutzobjekte bezeichnet, die in ihrem Umfang üblicherweise durch Struktur und Organisation des Speichers bestimmt sind. Oft entsprechen diese geschützten Bereiche des Speichers jeweils einer Speicherseite mit einer Speicherkapazität von 2KB bzw. 4KB. Jedem Schutzobjekt ist ein Schloss, repräsentiert durch ein Bitmuster, zugeordnet. Zugriff zu einem Schutzobjekt hat dann nur der Besitzer eines Schlüssels mit demselben Bitmuster. Der Schlüssel ist in einem Teil eines Steuerregisters des Prozessors geführt, das häufig den Funktionszustand der datenverarbeitenden Anlage bestimmt. Er wird durch priviligierte Befehle gesetzt und abgefragt, so dass der Benutzer zu ihm keinen Zugriff hat.

Wie oben bereits angedeutet, ist den komplexen Anforderungen an den Speicherschutz häufig nur dann zu genügen, wenn er abgestuft wird. Deshalb gibt es für den Schlüsselschutz auch Funktionserweiterungen, z.B. mit zusätzlichen Anzeigen im Schloss, häufig durch eine weitere Bitstelle, um festzulegen, ob der Schutz nur gegen Veränderungen durch Schreibzugriffe oder auch gegen Lesezugriffe wirksam sein soll.

Daneben kann ein bestimmtes Bitmuster auch ein sogenanntes «geöffnetes Schloss» repräsentieren, zu der zugehörigen Schutzeinheit darf dann jeder zugreifen. Umgekehrt kann die unbeschränkte Zugriffsberechtigung eines Benutzers zu allen Schutzobjekten durch ein bestimmtes Bitmuster im Schlüssel ausgedrückt werden.

Dieser Schlüsselschutz hat den Nachteil, dass entweder mehreren Benutzern zugängliche Objekte allen Benutzern offenstehen oder dass mit dem Recht des Zugriffs auf verschieden geschützte Objekte das Zugriffsrecht auf alle so geschützten Objekte vergeben werden muss. Dazu kommt die geringe Anzahl der zur Verfügung stehenden verschiedenen Schlösser, so dass bei Teilnehmersystemen der volle Funktionsumfang des Schlüsselschutzes häufig nicht mehr ausgenutzt und nach anderen Schutzmöglichkeiten gesucht wird.

Eine solche Möglichkeit ist der bekannte Ringschutz. Hier ist jedem Schutzobjekt eine Ringnummer für Lesezugriffe und eine weitere für Schreibzugriffe zugeordnet. Die entsprechende Operation ist einem Benutzer erlaubt, wenn er eine Ringnummer kleiner oder gleich der Ringnummer des Schutzobjektes für diese Operation besitzt. Diese Art des Speicherschutzes wird vielfach bei virtuellen Speichern angewandt. Der Struktur virtueller Speicher entsprechend, sind die Schutzobjekte häufig grössere Bereiche, d.h. Speichersegmente mit einer Mehrzahl der obengenannten Speicherseiten. Ein Nachteil des Ringschutzes besteht darin, dass Benutzer gleicher Ringnummern in derselben Weise priviligiert sind, also kein Schutz untereinander besteht. Darüber hinaus sind bei diesem Schutzverfahren die Inhaber kleiner Ringnummern hochpriviligiert und daher schlecht kontrollierbar.

In den immer komplexer werdenden datenverarbeitenden Systemen mit einem immer grösseren Software-Anteil muss man deren Betriebssicherheit weiter verbessern. Das gelingt durch eine modulare Struktur der Software und durch eine lückenlose Überwachung des Arbeitens an und mit diesen Softwaremodulen. Insbesondere müssen dabei die einzelnen Module im Arbeitsspeicher eindeutig gegeneinander abgesichert sein, was deshalb so schwierig ist, weil sie anderseits gegebenenfalls möglichst ungehindert untereinander Daten austauschen müssen.

Diese modulare Struktur der Software ist in einem Schutzmechanismus berücksichtigt, in dem jedem abzugrenzenden Modul, der ein Schutzobjekt darstellt und Codes und/oder Daten enthält, ein eigener virtueller Adressraum zur Verfügung gestellt wird. Die Kommunikation der Module untereinander geschieht dann über gemeinsame Speicherbereiche. Überwacht man zusätzlich innerhalb eines solchen virtuellen Raumes die Trennung von Code, Lesedaten und Schreib-Lese-Daten, so lässt sich an sich jede beliebige Schutzstruktur verwirklichen.

Sehr aufwendig ist dabei allerdings die durch das Betriebssystem der datenverarbeitenden Anlage wahrzunehmende Verwaltung einer Vielzahl virtueller Räume, die sich ausserdem noch mehrfach überlappen, weil sie gemeinsame Speicherbereiche haben. Jeder Wechsel der Zugriffsrechte muss als Wechsel des virtuellen Speichers, d.h. als Benutzerwechsel, organisiert werden. In den hierzu erforderlichen aufwendigen Betriebsroutinen kommt noch eine unter Umständen erhebliche Leistungsminderung des Prozessors durch das Löschen von Hardwarekopien der Adressübersetzungsinformation.

Durch «Proceedings of the Spring Joint Computer Conference», 1972, Seiten 417 bis 429, insbesondere Seite 425, linke Spalte, sind des weiteren zwei Lösungen bekannt, die mit benutzerindividuellen Tabellen arbeiten, in denen für jedes mögliche Schutzobjekt die benutzerindividuellen Zugriffsrechte listenförmig für einen direkten Zugriff oder für einen indirekten Zugriff mittels eines Schlüssels in weiteren objektindividuellen Tabellen zusammengestellt sind. Gemäss Seite 426, linke Spalte, 2. Abschnitt können die Datensicherungstabellen auch in Adressübersetzungseinrichtungen virtueller Speicher einbezogen werden. Die indirekte Zugriffsform mittels Schlüssel entspricht weitgehend dem bereits vorangehend beschriebenen Schlüsselschutz. Beide Lösungen ermöglichen zwar einen weitgehenden modularen Objektschutz. Der Aufwand für die Realisierung dieser Lösungen ist aber verhältnismässig gross, und gegebenenfalls kann die zwangsmässige Kopplung von Objektadresse und Zugriffsrecht zur Einschränkung der Flexibilität führen.

Es ist daher Aufgabe der Erfindung, eine Einrichtung zum Sichern von Daten entsprechend der eingangs genannten Art zu schaffen, die der modularen Struktur der Software entspricht und jedem Benutzer in einfacher Weise und bei geringem Aufwand differenzierte Zugriffsrechte zu den einzelnen Schutzobjekten ermöglicht.

Diese Aufgabe wird erfindungsgemäss dadurch gelöst, dass die benutzerindividuellen Tabellen aus jeweils einer Matrix mit n jeweils einer Schutzklasse entsprechenden Zeilen und mit m jeweils einer der zu unterscheidenden Zugriffsoperationen zugeordneten Spalten besteht, dass neben den benutzerindividuellen Speichertabellen eine weitere Speichertabelle vorgesehen ist, die die jedem Schutzobjekt zugeordnete Schutzklasse als Schutzraumnummer enthält, so dass mittels einer ersten Adressiereinrichtung (AR, ACU) zunächst aus der weiteren Speichertabelle zu einem aus dem auszuführenden Befehl ableitbaren Schutzobjekt die zugehörige Schutzraumnummer (PNRK) ermittelbar ist und anschliessend mittels einer zweiten Adressiereinrichtung (AR, PRR) ausgehend von einem Benutzerkennzeichen als Basisadresse und von der Schutzraumnummer als Distanzadresse in der jeweils zugehörigen Matrix die zuständige Zeile und anhand der anstehenden Zugriffsoperation die entsprechende Spalte ansteuerbar sind, und dass der durch die Spalten-/Zeilenauswahl ausgewählte Speicherplatz der Matrix in Form einer Ja-/Nein-Aussage unmittelbar über den gewünschten Zugriff entscheidet.

Bei dieser Lösung ist jedem Schutzobjekt eine Schutzraumnummer zugeordnet. Diese definiert aus einer Vielzahl von Schutzklassen genau eine. In den benutzerindividuellen Zugriffstafeln sind andererseits jeweils die unterschiedlichen Zugriffsrechte des einzelnen Benutzers in jeder Schutzklasse festgelegt. Auf einfache Weise können ihm damit also in den einzelnen Schutzklassen unterschiedliche Operationen bzw. Kombinationen von Operationen beim Zugriff zu einem Schutzobjekt erlaubt werden. Auch in Teilnehmersystemen mit einer Vielzahl von Benutzern eines datenverarbeitenden Systemes lässt sich mit der erfindungsgemässen Lösung, ohne das Betriebssystem stark zu belasten, mit einfachen schaltungstechnischen Mitteln ein individueller Schutz für jedes Schutzobjekt realisieren. Wie einleitend angedeutet ist, ist eine solche Schutzmöglichkeit nicht nur auch auf Datenbanksysteme und ähnliches anzuwenden, sondern überall dort von Vorteil, wo eine Vielzahl von Benutzern im allgemeinsten Sinne gemeinsam ein nachrichtenverarbeitendes System benutzt und unterschiedliche Zugriffsrechte zu einzelnen Teilen des Systems benutzerspezifisch gewährt werden sollen.

Da jedoch gegenwärtig in der Datenverarbeitung unmittelbar solche Schutzprobleme, wie oben erläutert, dringend gelöst werden müssen, sind auch Weiterbildungen der Erfindung speziell auf die Lösung des Speicherschutzes bei datenverarbeitenden Systemen mit virtuellen Adressenräumen ausgerichtet. Wie sich aus den Unteransprüchen ergibt, können erfindungsgemässe Lösungen für eine Einrichtung zum Sichern von Daten in virtuell adressierten Arbeitsspeichern unmittelbar in Adressübersetzungseinrichtungen integriert werden. In vorteilhafter Weise ist dann während der Adressübersetzung für eine Speicheranforderung auch die Zugriffsberechtigung und sogar ohne grossen hardwaremässigen Aufwand überprüfbar. Diese Prüfung ist so rechtzeitig abgeschlossen, dass berechtigte Speicherzugriffe kaum verzögert werden müssen. Es sind datenverarbeitende Anlagen mit einem Adressübersetzungsspeicher zum Beschleunigen der Adressübersetzung bekannt, in dem im Regelfall eine Abbildung der angeforderten virtuellen Adresse in eine physikalische Arbeitsspeicheradresse enthalten sein soll. In solche Abbildungen kann zusätzlich die Schutzklasse des zugehörigen virtuellen Speichersegmentes aufgenommen werden. Die Hilfsspeicher mit den Zugriffsrechtafeln der Benutzer werden mit der Schutzraumnummer des Speichersegmentes adressiert. Die so ermittelten Zugriffsrechte können für jeweils einen Benutzer ebenso in den Adressübersetzungsspeicher übernommen werden. So lassen sich bei einer Speicheranforderung mit einer virtuellen Adresse mehrfache Speicherzugriffe allein zur Überprüfung der Zugriffsberechtigung vermeiden.

Bei einem Benutzerwechsel, das gilt sowohl für einen Prozess als auch für eine Prozessphase, bleiben die Abbildungen virtueller Adressen in physikalische Arbeitsspeicheradressen im Adressübersetzungsspeicher erhalten, in einer kurzen Unterroutine für die Adressübersetzung müssen dann nur die Schutzbeziehungen aktualisiert werden. Dieser Aufbau einer Einrichtung zum Sichern von Daten ermöglicht die simultane Überwachung der Zugriffsberechtigung während der Adressübersetzung. Bei einem Speicherschutzfehler, also einem unberechtigten Zugriff, reicht es aus, bei einem Lesevorgang die Lesedaten zu ignorieren bzw. bei einem Schreibvorgang den Auftrag dazu im letzten Moment zu widerrufen, so dass die Ablaufsteuerung durch die Überwachung der Schutzbeziehung nicht unnötig kompliziert wird.

Ein Ausführungsbeispiel der Erfindung wird nachfolgend anhand der Zeichnung näher erläutert. Dabei zeigt:

Fig. 1 in einem Blockschaltbild das Prinzip des Schutzes eines Schutzobjektes gegen unberechtigten Zugriff, das bei der Erfindung angewandt wird,

Fig. 2 eine Ausführungsform der Erfindung zum Schutz von Segmenten eines virtuellen Speichers, die in eine Einrichtung zur Adressübersetzung integriert ist.

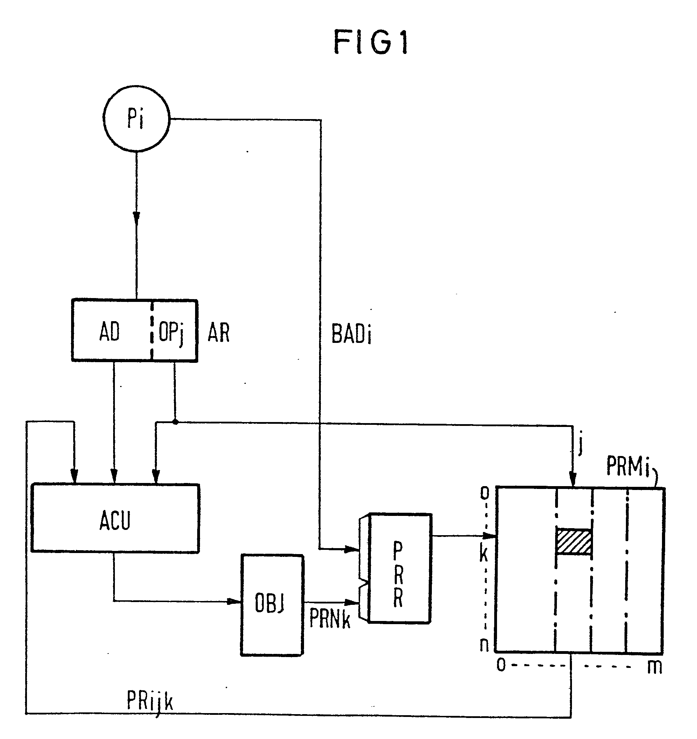

In Fig. 1 ist schematisch als Benutzer ein Prozess Pi mit einem zugeordneten Adressregister AR dargestellt. Dieses enthält eine Adresse AD, mit der zu einem bestimmten Teil eines zu schützenden Objektes OBJ zugegriffen werden soll, und einen Operationsteil OPj, der die Art der Operation definiert. Der Zugriff des Prozesses Pi zu dem Schutzobjekt OBJ wird von einer Steuereinheit ACU gesteuert. Dem Schutzobjekt OBJ ist jeweils eine Schutzraumnummer PRNk zugeordnet, die festlegt, welcher Schutzklasse k das Schutzobjekt OBJ zugehört. Diese Schutzraumnummer PRNk wird einem Auswahlregister PRR für einen Schutzraumspeicher PRMi übergeben.

Je ein solcher Schutzraumspeicher ist einer Zugriffseinheit, hier dem Prozess Pi, zugeordnet. In diesem Schutzraumspeicher PRMi, der hier schematisch in Form einer Matrix dargestellt ist, sind n Schutzräume in den Zeilen dieses Speichers festgelegt. Die Anzahl m der Spalten dieses Speichers ergibt sich aus der Anzahl der in bezug auf Zugriffsrechte unterschiedlichen Zugriffsarten, die wiederum im Operationsteil OP festgelegt sind.

Bei jedem Zugriff zu einem Schutzobjekt OBJ wird sein Schutzraumspeicher PRMi mit einer vom Prozess Pi abhängigen Basisadresse BADi durch die Schutzraumnummer PRNk als Distanzadresse und die Zugriffsart OPi ein Element der Speichermatrix adressiert. Enthält es eine «0», so ist der gewünschte Zugriff verboten; enthält es eine «1», so ist dieser Zugriff erlaubt, das wird der Steuereinheit ACU als Schutzsignal PRijk mitgeteilt.

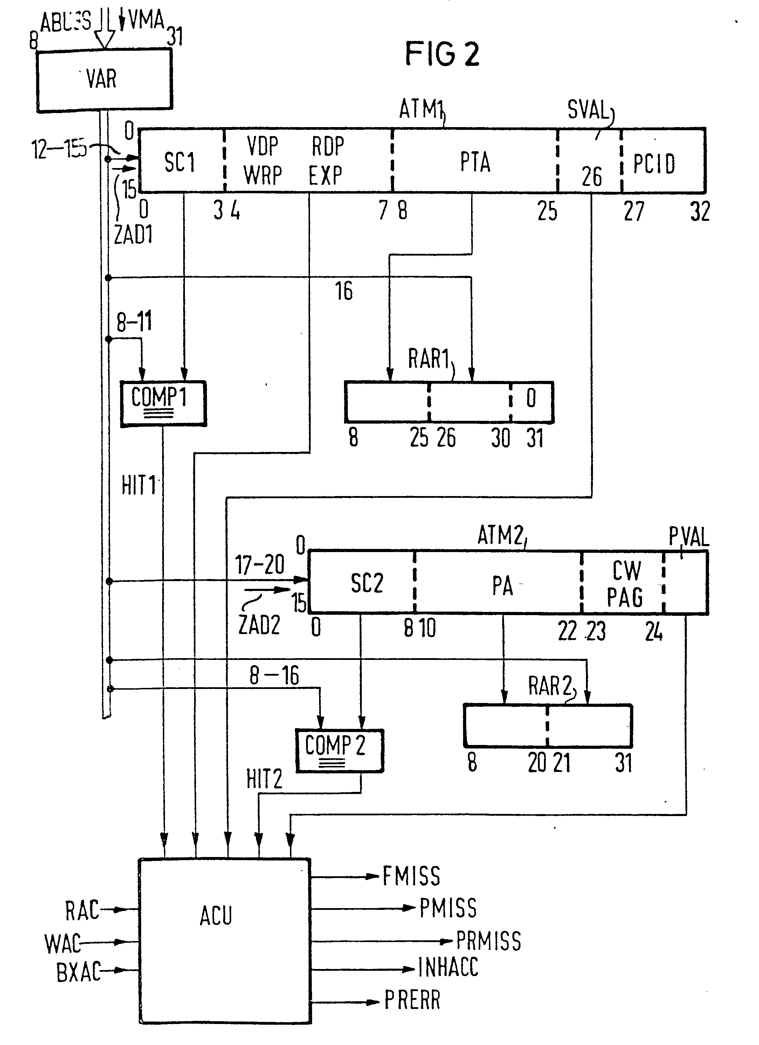

Wie dieses anhand von Fig. 1 erläuterte Prinzip des individuellen Schutzes einer Mehrzahl von Schutzobjekten gegen unberechtigte Zugriffe beim Schutz eines virtuellen Speichers eingesetzt werden kann, ist in Fig. 2 dargestellt.

Bei einem virtuellen Speicher wird jedem Benutzer bekanntlich der gesamte Speicherraum des Arbeitsspeichers einer datenverarbeitenden Anlage scheinbar uneingeschränkt zur Verfügung gestellt. Tatsächlich ist jedoch im physikalischen Arbeitsspeicher nur ein Teil eines virtuellen Speichers jeweils resident, wobei auch die räumliche Zuordnung der speicherresidenten Teile des virtuellen Speichers im Arbeitsspeicher nicht von vornherein festliegt.

Aus diesem Grunde ist – für den Benutzer unsichtbar – bei jedem Zugriff zu einem virtuellen Speicher zunächst ein Übersetzungsvorgang erforderlich. Mit einer übersetzten realen Adresse wird dann zum physikalischen Arbeitsspeicher der datenverarbeitenden Anlage zugegriffen. Bei grossen Arbeitsspeichern ist eine vollständige Adressübersetzung verhältnismässig aufwendig, da sie in mehreren Stufen verläuft. In jeder Stufe wird zu Übersetzungstafeln zugegriffen, die ebenfalls im Arbeitsspeicher niedergelegt sind. Bekanntlich lässt sich dieser Vorgang beschleunigen, wenn man einen Adressübersetzungsspeicher verwendet, der unmittelbar mit einem Teil einer virtuellen Adresse adressierbar ist und an den so ausgewählten Speicherplatz die dieser virtuellen Adresse zugeordnete reale Adresse enthält, sofern diese bereits einmal übersetzt werden musste und in letzter Zeit noch benutzt wurde.

Diese verkürzte Adressübersetzung und die Prüfung einer Zugriffsberechtigung lässt sich gemeinsam in einer Einheit realisieren, die in Fig. 2 dargestellt ist. Im vorliegenden Fall stellt jedes Segment eines virtuellen Speichers ein Schutzobjekt OBJ dar, und es werden drei Zugriffsarten, Lese-, Schreib- und Befehlszugriffe mit differenzierten Zugriffsrechten, unterschieden. Die dargestellte Einrichtung ermöglicht nun, parallel zu einer verkürzten Adressübersetzung gleichzeitig die Zugriffsberechtigung zu überprüfen, da es bei nicht berechtigtem Speicherzugriff ausreicht, ausgelesene Speicherdaten zu ignorieren bzw. bei einer Schreiboperation das Schreiben in einen bereits ausgewählten Speicherplatz gewissermassen im letzten Moment zu widerrufen. Das bedeutet, dass die Überprüfung der Zugriffsberechtigung erst im Laufe der Einleitung des eigentlichen Speicherzugriffs abgeschlossen werden muss.

Da die Prinzipien des Zugriffs zu einem virtuellen Speicher an sich bekannt sind, erscheint es nicht notwendig, den Adressübersetzungsvorgang und die dazu benutzten Einrichtungen in vollem Umfang zu erläutern. Hier wird damit als vorgegeben angesehen, dass bei einer Speicheranforderung bereits unterschieden ist, ob hier eine reale oder eine virtuelle Adresse vorliegt. In letzterem Fall soll bereits eine virtuelle Adresse VMA über einen Adressenbus ABUS in ein Eingangsregister VAR für virtuelle Adressen übertragen sein. Das Register hat in diesem Beispiel eine Breite von 24 Bitstellen, die höchstwertige Bitstelle ist mit Bit 8, die niederwertigste mit Bit 31 benannt.

Für die Adressumsetzung wird die virtuelle Adresse in eine Segmentnummer an den Bitstellen 8 bis 15, eine virtuelle Seitennummer an den Bitstellen 16 bis 20 und eine Bytenummer unterteilt, die die restlichen niederwertigen Bitstellen belegt. Da eine virtuelle Speicherseite im physikalischen Arbeitsspeicher fortlaufend niedergelegt ist, muss nur aus den ersten beiden Teilen die physikalische Seitenadresse ermittelt werden.

Für bereits übersetzte und häufiger benutzte Einträge im physikalischen Arbeitsspeicher ist der Adressübersetzungsspeicher vorgesehen, der hier für mehrstufige Adressübersetzungsvorgänge in zwei Teilen ATM1 bzw. ATM2 dargestellt ist. Beide Teilspeicher besitzen in diesem Beispiel 16 Eintragszeilen, die – wie angedeutet – mit Zeilenadressen ZAD1, ZAD2, d.h. durch die niederwertigen Bitstellen 12 bis 15 der im Eingangsregister VAR stehenden Segmentnummer bzw. die niederwertigen Bitstellen 17 bis 20 der Seitennummer adressiert werden. Der Inhalt beiter Teilspeicher ATM1 und ATM2 erlaubt folgende Funktion auszuführen: Im ersten Teilspeicher ATM1 kann eine virtuelle Segmentnummer in die zugehörige Seitentafeladresse abgebildet werden.

Weiterhin werden Informationen über die hier insbesondere interessierenden Zugriffsrechte zu virtuellen Segmenten gespeichert und bie einer Adressübersetzung ausgewertet. Mit dem zweiten Teilspeicher ATM2 können die Segment- und Seitennummern in reale Adressen RMA umgewandelt werden.

Dazu enthält der erste Teilspeicher ATM1 an den ersten vier Bitstellen ein Vergleichsfeld SC1. In ihm sind die Bitstellen 8 bis 11 der virtuellen Adresse VMA gespeichert, für die der Eintrag gilt. Die folgenden Bitstellen 4 bis 7 nehmen die Schutzinformationen auf. Dazu gehören ein Gültigkeitssignal VDP, ein Leseschutzsignal RDP, ein Schreibschutzsignal WRP und ein Befehlsleseschutzsignal EXP. Das Gültigkeitssignal VDP kann in zurückgesetztem Zustand «0» alle anderen Schutzsignale für ungültig erklären. Im gesetzten Zustand «1» wird mit einem der anderen Schutzsignale RDP, WRP bzw. EXP jeweils die zugehörige Speicheroperation freigegeben.

Im folgenden Feld an den Bitstellen 8 bis 25 steht ein Seitentafeleintrag PTA, d.h. die reale Basisadresse der Seitentafel, zu der die virtuelle Adresse VMA gehört. An der folgenden Bitstelle 26 ist eine Gültigkeitsanzeige SVAL für den betreffenden Eintrag in den ersten Teilspeicher ATM1 niedergelegt. Das letzte Feld mit den Bitstellen 27 bis 32 enthält schliesslich einen aus dem Segmenttafeleintrag zu entnehmenden Zeiger PCID für den dem Prozess Pi zugehörigen Schutzraumspeicher PRMi, der als Zugriffsrechtstafel – ebenso wie die Adressübersetzungstafeln – im Arbeitsspeicher der datenverarbeitenden Anlage niedergelegt ist.

Im zweiten Teilspeicher ATM2 steht an den Bitstellen 0 bis 8 ein zweites Vergleichsfeld SC2. Es enthält die Bitstellen 8 bis 16 der virtuellen Adresse VMA, für die der Eintrag gilt. Daran schliesst sich an den Bitstellen 10 bis 22 ein Eintrag PA mit den Bitstellen 8 bis 20 der realen Adresse der physikalischen Blockadresse unmittelbar an, die aus der auf dem Adressenbus ABUS liegenden virtuellen Adresse VMA übersetzt wird. Die folgenden beiden Bitstellen enthalten ein Steuerbit CW für einen bereits erfolgten Schreibzugriff sowie ein weiteres Steuerbit PAG, das im Falle eines laufenden Seitenwechselverfahrens («Paging») im Zustand «1» ist. Auch ein Eintrag mit zweiten Teilspeicher ATM2 ist durch eine weitere Gültigkeitsanzeige PVAL als gültig zu kennzeichnen.

Die beiden Teilspeicher ATM1 bzw. ATM2 erlauben einen mehrstufigen Adressübersetzungsvorgang abzukürzen. Ein Treffer im zweiten Teilspeicher ATM2 liefert unmittelbar eine reale Speicheradresse, ein Treffer im ersten Teilspeicher ATM1 nur die Basisadresse der Seitentafel, zu der die virtuelle Adresse VMA gehört. Um einen Treffer bzw. einen Miss festzustellen, sind an die Ausgänge der beiden Vergleichsfelder SC1 und SC2 jeweils Komparatorschaltungen COMP1 bzw. COMP2 angeschlossen, denen ausserdem – wie dargestellt – vom Ausgang des Eingangsregisters VAR für virtuelle Adressen die entsprechenden Bitstellen zugeführt werden. Die genannten realen Speicheradressen werden bei einem Treffer in einem Teilspeicher ATM1 bzw. ATM2 in Adressregistern RAR1 bzw. RAR2 zu einer realen Seitentafeladresse bzw. einer vollständigen realen Speicheradresse zusammengesetzt.

Die Ausgänge der Komparatorschaltungen COMP1 bzw. COMP2, die die Treffersignale HIT1 bzw. HIT1 führen, sind an die hier nur schematisch dargestellte Steuereinheit ACU angeschlossen, der darüber hinaus die Schutzinformationen VDP, RDP, WRP und EXP aus dem ersten Teilspeicher ATM1, die beiden Gültigkeitsanzeigen SVAL, PVAL aus den beiden Teilspeichern ATM1 bzw. ATM2 und zur Unterscheidung der Speicherzugriffsarten Zugriffssignale RAC, WAC, EXAC für einen Lese-, einen Schreib- bzw. einen Befehlslesezugriff zugeführt sind. Eine solche Steuereinheit ACU hat bekanntlich die Aufgabe, eine Reihe von Steuersignalen zu erzeugen, die die verschieden möglichen Zustände bei einem angeforderten Speicherzugriff definieren. Die Ausgangssignale, z.B. FMISS der Steuereinheit ACU, also vor allem Steuer- und Fehlersignale.

Da Speichersteuereinheiten als solche bekannt sind, erscheint es hier nicht notwendig, die Steuereinheit ACU im Schaltungsdetail darzustellen. Vielmehr sollen im folgenden die hier wesentlichen Funktionen anhand der Verknüpfung der genannten Eingangssignale erläutert werden. Dabei werden aus den genannten Eingangssignalen folgende Ausgangssignale durch logische Verknüpfungen abgeleitet, die hier in Form von Booleschen Gleichungen angegeben sind. Die Umsetzung dieser Funktionen in einen Schaltungsaufbau ist in der elektronischen Datenverarbeitung durchaus geläufig, so dass deshalb wohl auf eine zeichnerische Darstellung verzichtet werden kann.

Ein erstes Ausgangssignal FMISS ergibt sich aus

$$(1)\ FMISS = \overline{HIT1} \vee \overline{SVAL}$$

Die Beziehung (1) besagt, dass dieses Ausgangssignal immer dann erzeugt wird, wenn in den Adressübersetzungsspeicher ATM1, ATM2 kein Treffer bei einer Adressübersetzung erzielt wird. Mit dem Ausgangssignal FMISS wird der Speicherzugriff zunächst verhindert. Es läuft dann ein Mikroprogramm zum Laden der Teilspeicher ATM1 und ATM2 an, dieses benötigt dabei drei Speicherzugriffe zum realen Arbeitsspeicher.

Ein zweites Ausgangssignal PMISS ergibt sich aus

$$(2)\ PMISS = HIT1 \wedge SVAL \wedge \overline{(\overline{HIT2} \vee \overline{PVAL})}$$

Dieses Ausgangssignal tritt immer dann auf, wenn im zweiten Teilspeicher ATM2 kein Treffer erzielt wird. Auch hier wird ein Speicherzugriff zur Durchführung der angeforderten Speicheroperation zunächst verhindert. Unter Benutzung der im ersten Adressregister RAR1 stehenden realen Seitentafeladresse wird ein Mikroprogramm zum Laden des zweiten Teilspeichers ATM2 angestossen, das in diesem Fall nur einen Speicherzugriff erfordert.

Neben diesen beiden genannten Ausgangssignalen FMISS bzw. PMISS, die den eigentlichen Adressübersetzungsvorgang betreffen, werden Speicherschutzsignale erzeugt. Das dritte Ausgangssignal PRMISS ergibt sich aus

$$(3)\ PRMISS = \overline{VDP} \vee \overline{FMISS}$$

Dieses Ausgangssignal besagt, dass im ersten Teilspeicher ATM1 keine gültige Schutzinformation für die angeforderte Speicheroperation vorliegt. Die Folge ist auch hier, dass die mit der virtuellen Adresse VMA angeforderte Speicheroperation zunächst verhindert wird. Hier wird nun ein Mikroprogramm zum Laden des entsprechenden Schutzeintrages in den ersten Teilspeicher ATM1 angestossen. Dabei ist ein Speicherzugriff zum physikalischen Arbeitsspeicher notwendig.

Ein weiteres Ausgangssignal PRERR der Steuereinheit ACU ergibt sich aus der folgenden Verknüpfung der Eingangssignale:

$$(4)\ PRERR = [(\overline{RDP} \wedge RAC) \vee (\overline{WRP} \wedge WAC) \vee \\ \vee (\overline{EXP} \wedge EXAC)] \wedge (\overline{FMISS} \vee \overline{PRMISS})$$

Dieses Ausgangssignal besagt, dass die mit der virtuellen Adresse VMA angeforderte Speicheroperation den Speicherschutz verletzt. In diesem Fall wird der Speicherzugriff unterdrückt. Das Betriebssystem der datenverarbeitenden Anlage erhält Kenntnis von dem aufgetretenen Fehler und leitet daraufhin eine entsprechende Fehlerroutine ein.

Ein weiteres Ausgangssignal INHACC der Steuereinheit ACU verknüpft die obengenannten Ausgangssignale in folgender Form:

$$(5)\ INHACC = FMISS \vee PMISS \vee PRMISS \vee \\ PRERR$$

Daraus ist ersichtlich, dass dieses Signal das für die Speicheransteuerung wesentliche Signal zur Unterdrückung eines Speicherzugriffes darstellt, ohne dass hier noch die Ursache für diesen zunächst verbotenen Speicherzugriff unterscheidbar ist.

Die anhand von Fig. 2 erläuterte Schaltungsanordnung erlaubt neben der hier nur teilweise im Detail vorgestellten Adressübersetzungsroutine zugleich eine Überwachung des Speicherschutzes. Dabei geht man von der Überlegung aus, dass bestimmte Programmkörper zwar zu ein und demselben virtuellen Adressraum gehören, aber mit verschiedenen Zugriffsrechten zu den einzelnen virtuellen Segmenten ausgestattet sein sollen. Unter einem solchen Programmkörper kann man sich einen Prozess, eine sogenannte «Task»

oder auch nur eine Taskphase vorstellen. Bei einem Wechsel von einem solchen Programmkörper zu einem anderen kann dann die Abbildung virtueller Adressen in reelle Adressen erhalten bleiben, während sich die Zugriffsrechte ändern. Für den geschilderten Adressübersetzungsspeicher ATM bedeutet dies, dass nur die Schutzsignale RDP, WRP und EXP geändert werden müssen.

Das erreicht man durch das bei einem solchen Wechsel in den Zustand «0» gesetzte Gültigkeitssignal VDP. Bei nachfolgenden Speicheranforderungen treten dann zwei mögliche Situationen auf: Mit einem Treffersignal HIT2 wird dokumentiert, dass die zu übersetzende Speicheradresse im Adressübersetzungsspeicher ATM abgebildet ist. Da jedoch das Gültigkeitssignal VDP im Zustand «0» ist, wird das dritte Ausgangssignal PRMISS der Steuereinheit ACU erzeugt. Dieses führt zum Aufruf einer Adressübersetzungsroutine. In einer ausgelösten Unterroutine wird dann die neue Schutzbeziehung in den ersten Teilspeicher ATM1 des Adressübersetzungsspeichers eingetragen.

Ist jedoch bei einer Speicheranforderung die virtuelle Adresse VMA nicht im Adressübersetzungsspeicher ATM1, ATM2 abgebildet, so wird dies durch das erste Ausgangssignal MISS der Steuereinheit ACU für einen fehlenden Eintrag dokumentiert. Hier ist der Zustand des Gültigkeitssignals VDP dann ohnehin irrelevant. In der dann ausgelösten Adressübersetzungsroutine werden sowohl die Adress- als auch die Schutzbeziehung in den Adressübersetzungsspeicher ATM1, ATM2 eingetragen. Dabei stellen dann die drei Schutzinformationen RDP, WRP, EXP einen Schutzvektor als Teil einer Schutzmatrix dar, der durch einen im Segmenttafeleintrag stehenden Zeiger PCID für die Zugriffsrechtstafel adressiert ist.

Die maximale Gültigkeitsdauer solcher Abbildungen virtueller Adressen ist an sich bereits nicht gross, da man davon ausgehen muss, dass in dieser Zeit nur auf einigen wenigen virtuellen Segmenten operiert wird. Bei der beschriebenen Schaltungsanordnung beschränkt man sich bei solchen Wechseln auf die Änderung der Schutzinformationen und gewinnt daraus den Vorteil, dass bei einem solchen Wechsel sämtliche schon vorhandenen und noch weiter verwendeten Adressabbildungen erhalten bleiben und darüber hinaus ein unnötiges Laden der gesamten Zugriffsrechtstafel in einen eigenen Teilspeicher umgangen werden kann.

Der Zustand «Speicherzugriff erlaubt» bzw. «Speicherzugriff nicht erlaubt» wird fast gleichzeitig mit dem Erkennen einer gültigen Abbildung im Adressübersetzungsspeicher ATM1, ATM2 erreicht. Dies wäre nicht der Fall, wenn zum Prüfen der Zugriffsberechtigung mehrere serielle Lesevorgänge durchgeführt werden müssten, wenn man aus einem Segmenttafeleintrag zunächst mit Hilfe der niederwertigen Bitstellen der Segmentnummer den Zeiger PCID für die Zugriffsrechtstafel ermittelt und aus dieser erst anschliessend die Zugriffsberechtigung anhand der Schutzsignale ausliest. Die im Ausführungsbeispiel in den Adressübersetzungsvorgang integrierte Ermittlung der Zugriffsberechtigung umgeht diese Verzögerung im Normalfall, also bei einem erlaubten Speicherzugriff zu einer im Adressübersetzungsspeicher bereits vorliegenden Abbildung der virtuellen Adresse. Sie vereinfacht die Ablaufsteuerung dieses Zugriffes, weil ein Steuersignal für einen nicht erlaubten Speicherzugriff nicht erst zeitlich verzögert auftritt und dann eigens eingefangen werden muss.

Bezugszeichenliste

Fig. 1

| | |
|---|---|
| Pi | Prozess |
| AR | Adressregister |
| AD | Adressteil |
| OBJ | Schutzobjekt |
| OPi | Operationsteil |
| ACU | Steuereinheit |
| PRNk | Schutzraumnummer |
| PRR | Auswahlregister für Schutzraumspeicher |
| PRMi | Schutzraumspeicher |
| BADi | Basisadresse |
| PRijk | Schutzsignal |

Fig. 2

| | |
|---|---|
| VMA | Virtuelle Adresse |
| ABUS | Adressenbus |
| VAR | Eingangsregister für virtuelle Adressen |
| ATM1 | erster Teilspeicher des Adressübersetzungsspeichers |
| ATM2 | zweiter Teilspeicher des Adressübersetzungsspeichers |
| ZAD1, ZAD2 | Zeilenadressen des ATM1 bzw. ATM2 |
| SC1 | 1. Vergleichsfeld |
| VDP | Gültigkeitssignal |
| RDP | Leseschutzsignal |
| WRP | Schreibschutzsignal |
| EXP | Befehlsleseschutzsignal |
| PTA | Seitentafeleintrag |
| SVAL | Gültigkeitsanzeige für ATM1-Eintrag |
| PCID | Zeiger für Zugriffsrechtstafel |
| SC1 | 2. Vergleichsfeld |
| PA | Eintrag für physikalische Blockadresse |
| CW | Steuerbit für früheren Schreibzugriff |
| PAG | Steuerbit für Seitenwechselverfahren |
| PVAL | Gültigkeitsanzeige für ATM2-Eintrag |
| COMP1, COMP2 | 1. bzw. 2. Komparatorschaltung |
| RAR1, RAR2 | 1. bzw. 2. Register für reelle Adressen |
| HIT1, HIT2 | 1. bzw. 2. Treffersignal |
| RAC | Zugriffssignal für Lesezugriff |
| WAC | Zugriffssignal für Schreibzugriff |
| EXAC | Zugriffssignal für Befehlslesezugriff |

| | |
|---|---|
| FMISS | 1. Ausgangssignal der Steuereinheit (Adressübersetzungs-MISS) |
| PMISS | 2. Ausgangssignal der Steuereinheit (Adressübersetzungs-MISS im ATM2) |
| PRMISS | 3. Ausgangssignal der Steuereinheit (fehlende gültige Schutzinformation) |
| PRERR | 4. Ausgangssignal der Steuereinheit (Zugriffsfehler zu geschützten Bereichen) |
| INHACC | 5. Ausgangssignal der Steuereinheit (Unterdrücken des angeforderten Speicherzugriffs) |

**Patentansprüche**

1. Einrichtung zum Sichern von in Datenverarbeitungsanlagen gespeicherten Daten gegen unberechtigten Zugriff, die zu bezüglich der Zugriffsberechtigung gleich zu behandelnden Schutzobjekten (OBJ) zusammengefasst sind und zu denen Benutzer (Pi) von der Art der beim Zugriff durchzuführenden Operation abhängige Zugriffsrechte besitzen, mit Speichereinrichtungen in Form von benutzerindividuellen Tabellen, die den einzelnen Schutzobjekten zugeordnete Angaben über die Zugriffsberechtigung enthalten, und mit Steuereinrichtungen, die jeweils bei Übereinstimmung der gewünschten Zugriffsoperation mit der gespeicherten Zugriffsberechtigung den Zugriff zu den Daten steuern, dadurch gekennzeichnet, dass die benutzerindividuellen Tabellen (PRMi) aus jeweils einer Matrix mit n jeweils einer Schutzklasse entsprechenden Zeilen und mit m jeweils einer der zu unterscheidenden Zugriffsoperationen (OPj) zugeordneten Spalten besteht, dass neben den benutzerindividuellen Speichertabellen (PRMi) eine weitere Speichertabelle vorgesehen ist, die die jedem Schutzobjekt (OBJ) zugeordnete Schutzklasse als Schutzraumnummer (PRNk) enthält, so dass mittels einer ersten Adressiereinrichtung (AR, ACU) zunächst aus der weiteren Speichertabelle zu einem aus dem auszuführenden Befehl ableitbaren Schutzobjekt die zugehörige Schutzraumnummer (PNRk) ermittelbar ist und anschliessend mittels einer zweiten Adressiereinrichtung (AR, PRR) ausgehend von einem Benutzerkennzeichen als Basisadresse (BADi) und von der Schutzraumnummer (PNRk) als Distanzadresse in der jeweils zugehörigen Matrix die zuständige Zeile (k) und anhand der anstehenden Zugriffsoperation (OPj) die entsprechende Spalte ansteuerbar sind, und dass der durch die Spalten-/Zeilenauswahl ausgewählte Speicherplatz der Matrix in Form einer Ja-/Nein-Aussage unmittelbar über den gewünschten Zugriff (PRijk) entscheidet.

2. Einrichtung zum Sichern von Daten nach Anspruch 1, die in einem virtuell adressierbaren Speicher einer datenverarbeitenden Anlage gespeichert sind, dessen Segmente die Schutzobjekte bilden, zu denen gegebenenfalls mehrere Prozesse dann auch bezüglich der zugelassenen Speicheroperationen unterschiedliche Zugriffsrechte haben, dadurch gekennzeichnet, dass die Einrichtung zur Datensicherung in eine Adressübersetzungseinrichtung zum Übersetzen der virtuellen Speicheradressen (VMA) in reelle Speicheradressen (RMA) einbezogen ist, so dass die Hilfsspeicher (PRMi) mit den Zugriffsrechtstafeln wie die für die Adressübersetzung benötigten Übersetzungstafeln zu behandeln sind, wobei die Schutzraumnummer (PRN) als Zeiger (PCID) einen Teil einer virtuellen Segmentnummer bildet, mit dem während eines Adressübersetzungsvorganges die entsprechende Eintragszeile der Zugriffsrechtstafel des aktuellen Prozesses (Pi) adressierbar ist.

3. Einrichtung nach Anspruch 2, dadurch gekennzeichnet, dass in der Adressübersetzungseinrichtung zum Speichern von Teilen (PA, PTA) der realen Adresse (RMA) vor kurzem übersetzter virtueller Adressen (VMA) ein Adressübersetzungsspeicher (ATM1, ATM2) vorgesehen ist, in dem ein Feld für den aus der Segmentnummer entnommenen Zeiger (PCID) mit der Schutzraumnummer (PRN) und ein weiteres Feld für Schutzinformationen (RDP, WRP, EXP) enthalten ist, das im Laufe der Adressübersetzung aus der adressierten Eintragszeile des ausgewählten Hilfsspeichers (PRMi) des aktuellen Prozesses (Pi) gelesen und übertragen wird, und dass die Adressübersetzungseinrichtung darüber hinaus eine Steuereinheit (ACU) besitzt, die bei einer Speicheranforderung bei der Adressübersetzung und der Überprüfung der Zugriffsberechtigung den Inhalt des Adressübersetzungsspeichers auswertet.

4. Einrichtung nach Anspruch 3, dadurch gekennzeichnet, dass die Steuereinheit (CU) zum Ableiten eines einen unberechtigten Zugriff kennzeichnenden Fehlersignals (PRERR) derart ausgebildet ist, dass sie bei einem durch Treffersignale (HIT1, HIT2) und Gültigkeitsanzeigen (SVAL, PVAL) gekennzeichneten Eintrag im Adressübersetzungsspeicher (ATM1, ATM2) jeweils eine der ausgelesenen Schutzinformationen (RDP, WRP, EXP) mit einem zugehörigen Zugriffssignal (RAC, WAC, EXAC) «UND»-verknüpft.

5. Einrichtung nach Anspruch 4, dadurch gekennzeichnet, dass in dem für die Schutzsignale (RDP, WRP, EXP) reservierten Feld des Adressübersetzungsspeichers (ATM1) eine weitere Bitstelle für ein Gültigkeitssignal (VDP) vorgesehen ist, das die gespeicherten Schutzsignale als gültig kennzeichnet und das bei einem die Schutzbeziehungen zwangsläufig ändernden Wechsel des Prozesses (Pi) rückgesetzt wird, und dass die Steuereinheit (ACU) derart ausgebildet ist, dass sie auch bei gültigen Adresseinträgen im Adressübersetzungsspeicher ein weiteres Ausgangssignal (PRMISS) erzeugt, sofern dieses Gültigkeitssignal rückgesetzt ist und damit eine Routine zum Nachladen der Schutzinformationen in den Adressübersetzungsspeicher auslöst.

## Claims

1. Device for protecting data, which are stored in data processing systems, against unauthorised access and which are combined to form protected objects (OBJ) which are to be equally treated in respect of the access authorisation and to which users (Pi) have access rights which are dependent upon the type of operation to be carried out during access, comprising storage devices in the form of user-individual tables which contain details on the access authorisation assigned to the individual protected objects, and comprising control devices which respectively control the access to the data when the required access operation corresponds to the stored access authorisation, characterised in that the user-individual tables (PRMi) respectively consist of a matrix having n lines, which respectively correspond to one protected class, and having m columns, which are respectively assigned to one of the access operations (OPj) to be distinguished, that in addition to the user-individual storage tables (PRMi), there is provided a further storage table which contains the protected class assigned to each protected object (OBJ) as protected position number (PRNk), so that by means of a first addressing device (AR, ACU), the assigned protected position number (PNRk) is firstly determinable from the further storage table for a protected object which can be derived from the instruction to be carried out, and by means of a second addressing device (AR, PRR), commencing from a user identification as a base address (NADi) and from the protected position number (PNRk) as a distance address, the authorised line (k) in the respectively assigned matrix and, by means of the pending access operation (OPj), the appropriate column are subsequently controllable, and that the storage location of the matrix which has been selected by the column/line selection directly decides on the required access (PRijk) in the form of a Yes-/No-statement.

2. Device for protecting data as claimed in claim 1 which are stored in a virtually addressable store of a dataprocessing system, the segments of which store form the protected objects, to which, if necessary, a plurality of processes have different access rights in respect of the approved storage operations, characterised in that the device for protecting data is incorporated in an address translation device for translating virtual storage addresses (VMA) into real storage addresses (RMA) so that the auxiliary stores (PRMi) having the access right tables are to be treated as the translation tables required for the address translation, wherein the protected position number (PRN) forms a part of a virtual segment number by means of which the corresponding entry line of the access right table of the actual process (Pi) is addressable during an address translation operation.

3. Device as claimed in claim 2, characterised in that in the address translation device, for the storage of parts (PA, PTA) of the real address (RMA) of recently translated virtual addresses (VMA), there is arranged an address translation store (ATM1, ATM2) in which a field for the indicator (PCID), which is derived from the segment number and has the protected position number (PRN), and a further field for protected information (RDP, WRP, EXP) are contained, which field is read out from the addressed entry line of the selected auxiliary store (PRMi) and transmitted in the course of the address translation, and that the address translation device further possesses a control unit (ACU) which in the case of a storage request during the address translation and checking of the access authorisation analyses the content of the address translation store.

4. Device as claimed in claim 3, characterised in that in order to derive a fault signal (PRERR) characterising an unauthorised access, the control unit (CU) is designed in such manner that in the case of entry in the address translation store (ATM1, ATM2) characterised by hit signals (HIT1, HIT2) and validity indicators (SVAL, PVAL), the control unit respectively «AND» links one of the read-out items of protected information (RDP, WRP, EXP) with an assigned access signal.

5. Device as claimed in claim 4, characterised in that in the field of the address translation store (ATM1) which is reserved for the protected signals (RDP, WRP, EXP), there is arranged a further bit position for a validity signal (VDP) which characterises the stored protected signals as being valid and which is reset in the case of a change of the process (Pi) which inevitably alters the protection relationships, and that the control unit (ACU) is so designed that even in the case of valid address entries into the address translation store, it produces a further output signal (PRMISS) provided that this validity signal is reset and thus triggers a routine for reloading protected information into the address translation store.

## Revendications

1. Dispositif pour protéger des données emmagasinées dans des ordinateurs contre l'accès non autorisé, qui sont rassemblées en objets à protéger (OBJ) à traiter de la même façon du point de vue de l'autorisation à l'accessibilité et auxquelles les utilisateurs (Pi) possèdent des droits d'accès qui dépendent du genre de l'opération à exécuter lors de l'accès, du type comportant des dispositifs de mémorisation se présentant sous la forme de tableaux individuels pour les utilisateurs et qui contiennent des indications relatives à l'autorisation d'accès qui sont associées aux divers objets à protéger, et comportant des dispositifs de commande qui, lors de la concordance entre l'opération d'accès souhaitée et l'autorisation d'accès mémorisée commandent l'accès aux données, caractérisé par le fait que chacun des tableaux (PRMi) individuel aux utilisateurs est constitué par une matrice à n lignes correspondant respectivement à une classe à protéger et à m colonnes respectivement associées à une des opérations d'accès (OPj) à distinguer, qu'en plus du tableau de mémoire (PRMi) associé individuellement aux utilisateurs, il est prévu un tableau de mémoire supplémentaire qui comporte, comme mémoire de zone de protection (PRNk), la place de protection associée à chaque objet à protéger (OPj) en sorte qu'à l'aide d'un premier dispositif d'adressage (AR, ACU) on puisse déterminer d'abord, à partir dudit tableau de mémoire supplémentaire, d'une part, à partir de l'objet à protéger susceptible d'être déterminé à partir de l'instruction à exécuter, le numéro d'espace à protéger (PNRk) et, ensuite, on puisse déterminer, à l'aide d'un second dispositif d'adressage (AR, PRR), et en partant d'une référence caractéristique de l'utilisateur, comme adresse de base (BADi) et du numéro de zone à protéger (PNRk) comme adresse d'écart, dans la matrice associée, la ligne concernée (k) et, à l'aide de l'opération d'accès (OPj) présente, la colonne correspondante, et que l'emplacement de mémoire de la matrice, sélectionnée par le choix de colonne/ligne, décide directement de l'accès souhaité (PRijk) sous la forme d'une décision logique OUI/NON.

2. Dispositif pour protéger des données selon la revendication 1, qui sont mémorisées dans une mémoire, adressable virtuellement, d'une installation de traitement de données, et dont les segments constituent les objets à protéger auxquels éventuellement plusieurs processus ont également des droits d'accès différents du point de vue des opérations de mémorisation admises, caractérisé par le fait que le dispositif pour protéger les données est incorporé dans un dispositif de traduction d'adresse pour traduire les adresses virtuelles de mémoire (VMA) en adresses de mémoire réelles (RMA), en sorte que les mémoires auxiliaires (PRMi) avec les tableaux de droit d'autorisation, sont à traiter comme les tableaux de traduction qui sont nécessaires pour la traduction d'adresses, le numéro de zone de protection (PRN) formant, comme repère (PCID), une partie du numéro virtuel de segment avec lequel, pendant une opération de traduction d'adresse, la ligne d'inscription correspondante du tableau de droit d'accès du processus actuel (Pi) est susceptible d'être adressée.

3. Dispositif selon la revendication 2, caractérisé par le fait qu'il est prévu dans le dispositif de traduction d'adresse, pour la mémorisation de parties (PA, PTA) de l'adresse réelle (RMA), d'adresses virtuelles (VMA) traduites peu avant, une mémoire de traduction d'adresse (ATM1, ATM2) dans laquelle est contenue une zone pour le repère (PCID), avec le numéro de zone de protection (PRN), et prélevé du numéro de segment, ainsi qu'une zone supplémentaire pour les informations de protection (RDP, WRP, EXP), qui est lue dans le cours de la traduction d'adresse adressée de la mémoire auxiliaire sélectionnée (PRNi) du processus actuel (Pi) et qui est transmis, et que le dispositif de traduction d'adresse comporte, en plus, une unité de commande (ACU) qui, lors d'une demande de mémoire autour de la traduction d'adresse et du contrôle de l'autorisation d'accès, évalue le contenu de la mémoire de traduction d'adresse.

4. Dispositif selon la revendication 3, caractérisé par le fait que l'unité de commande (ACU) est réalisée de telle manière pour dériver un signal d'erreur (PRERR) qui caractérise un accès non autorisé, que lors de l'inscription dans la mémoire de traduction d'adresse caractérisée par des signaux (HIT1, HIT2) constatant l'obtention de correspondance et d'indication de validité (SVAL, PVAL), elle combine suivant une relation «ET» une information de protection (RDP, WRP, EXP) qui a été lue, avec un signal d'accès associé (RAC, WAC, EXAC).

5. Dispositif selon la revendication 4, caractérisé par le fait que dans la zone de la mémoire de traduction d'adresse (ATM1), réservée aux signaux de protection (RDP, WRP, EXP), est prévu un emplacement de bit supplémentaire pour un signal de validité (VDP) qui caractérisé comme étant valables les signaux de protection mémorisés, et qui est remis dans son état initial lors d'un changement de processus (Pi) qui change nécessairement les relations de protection, et que l'unité de commande (ACU) est réalisée de telle manière qu'elle produit, même pour des inscriptions valables dans la mémoire de traduction d'adresse, un signal de sortie supplémentaire (PRMISS), dans la mesure où ce signal de validité est remis dans son état initial et que se trouve de ce fait déclenché un sous-programme pour recharger les informations de protection dans la mémoire de traduction d'adresses.

# FIG 1

# FIG 2